# EUROPÄISCHE PATENTSCHRIFT

(11) **EP 0 485 895 B1**
(45) Veröffentlichungstag und Bekanntmachung des Hinweises auf die Patenterteilung: **18.09.1996**
(21) Anmeldenummer: 91119008.0
(22) Anmeldetag: 07.11.1991
(51) Int. Cl.: B32B 31/20, B29C 59/04

(54) **Vorrichtung und Verfahren zum Herstellen eines mehrschichtigen Folienverbundes**
Method and apparatus for producing a multi-layer laminate
Dispositif et procédé pour produire un stratifié multicouche

(30) Priorität: 12.11.1990 DE 4035872
(43) Veröffentlichungstag der Anmeldung: 20.05.1992
(73) Patentinhaber: HOECHST AKTIENGESELLSCHAFT, 65926 Frankfurt am Main (DE)
(72) Erfinder: Rohleder, Sabine, Dipl.-Ing., W-6108 Weiterstadt (DE); Coutandin, Jochen, Dr. Dipl.-Phys., W-6536 Langenlonsheim (DE)

(56) Entgegenhaltungen:
- EP-A- 0 212 232
- EP-A- 0 363 794
- AU-B- 527 905
- DE-A- 3 840 704
- FR-A- 1 441 508
- FR-A- 2 167 876
- GB-A- 1 220 080
- GB-A- 2 127 344
- US-E- 27 992
- PATENT ABSTRACTS OF JAPAN, Band 10, Nr. 281 (M-520)[2337], 25. September 1986; & JP-A-61 102 235 (DAIO KAKOSHI KOGYO) 20-05-1986

## Beschreibung

Die Erfindung betrifft eine Vorrichtung zum Herstellen eines mehrschichtigen Verbundes aus miteinander laminierten Materialbändern, mit einer Anzahl von Vorratsrollen, auf denen die bandförmigen Materialien aufgewickelt sind, die über paarweise einander gegenüberliegende, miteinander in Kontakt stehende Druckwalzen in eine horizontale plane Laminierstrecke umlenkbar sind, wobei die in gleichen oder unterschiedlichen Abständen voneinander in die plane Laminierstrecke umgelenkten, übereinandergeschichteten Materialbänder unter Druck- und Wärmeanwendung durch die Druckwalzen miteinander zu dem Verbund siegelbar sind und an die Laminierstrecke zumindest eine Kühl-, Präge- und/oder Preßeinrichtung anschließen, sowie ein Verfahren zum Herstellen eines mehrschichtigen Verbundes aus miteinander laminierten Materialbändern, durch Siegeln unter Druck- und Wärmeanwendung.

Seitens verschiedener Branchen, wie z.B. dem Apparatebau, dem Fahrzeug- und Flugzeugbau oder der Sicherheitstechnik, besteht ein zunehmend verstärktes Interesse an hochfesten Folienverbunden und Verbundkörpern sowohl in Form von Bändern als auch von Halbzeugen, wie z.B. Platten, als auch Fertigbauteilen. Dieser Entwicklung folgend werden von Plattenherstellern Techniken zur Fertigung mechanisch höher belastbarer Produkte erarbeitet. Parallel zur Modifizierung der für die Plattenproduktion vorgesehenen Polymerwerkstoffe durch den Einbau von Verstärkungsmaterialien, wie z.B. Textil-, Glas- oder Kohlenstoffasern, werden Techniken zur Herstellung eigenverfestigter Platten durch Orientierungsmaßnahmen entwickelt. Lösungen im Rahmen dieser Techniken stellen z.B. das Walzpreßrecken oder das in der EP-A 0 207 047 beschriebene Verfahren dar, dessen wesentliche Verfahrensmaßnahme darin besteht, eine Vielzahl biaxial verstreckte, mit dünnen, koextrudierten Siegelschichten ausgerüstete Folien zu einer beliebig dicken, homogenen Platte unter Anwendung von Druck und Wärme zu verpressen. Hierzu wird im allgemeinen der zwischen zwei Preßbleche eingelegte Folienstapel in diskontinuierlich arbeitende, hydraulische Plattenpressen in Einfach- oder Etagenbauweise eingebracht. Der Preßvorgang wird durch Verfahrensparameter, wie Druck, Temperatur und Zeit, bestimmt. Insbesondere der letzte Verfahrensparameter steht, vor allem im Falle der Durchwärmung sehr dicker Platten, einer kostengünstigen Herstellung von Verbundlaminaten entgegen. Kontinuierliche Durchlaufpressen, insbesondere Doppelbandpressen, stellen diesbezüglich eine praktikable, zeitsparende Lösung dar, sind aber hinsichtlich der auf ihnen zu realisierenden Geschwindigkeiten nur begrenzt einsetzbar.

Aus der US-E 27,992 ist eine Vorrichtung zum Herstellen eines Verbundes aus miteinander laminierten Materialien bekannt, die auf Vorratsrollen aufgewickelt sind oder von Extrusionseinrichtungen extrudiert werden, und einer horizontalen planen Laminierstrecke zugeführt werden, auf der sie unter Druckanwendung miteinander verbunden werden. Es werden Metall- und Kunststoffstreifen oder von einem ersten oder zweiten Extruder gelieferte Kunststoffstreifen miteinander laminiert. Die Vorrichtung umfaßt eine Druck- und Laminereinrichtung und eine Prägevorrichtung zum Deformieren von vorgegebenen Längen des laminierten Verbundes. Die beiden Materialstreifen können auch zusammen mit einem Grundträgermaterial laminiert werden. Das Laminieren einer Anzahl von mehr als zwei gleichen Kunststoffolienbändern ist aus diesem Dokument nicht bekannt.

In der DE-PS 35 20 309 sind ein Verfahren und eine Vorrichtung zum kontinuierlichen Herstellen von thermoplastischen Kunststoffbahnen, insbesondere für die Weiterverarbeitung zu Platten oder Folien, beschrieben, aus mindestens einer extrudierten, auf Verarbeitungstemperatur erwärmten Thermoplastbahn, die in erwärmtem Zustand zwischen zwei ortsfest angeordneten Druckplatten abgekühlt wird, so daß die Oberfläche der Thermoplastbahn kalibriert und geglättet wird. Die Abkühlung der Thermoplastbahn wird unter Einwirkung von Flächendruck vorgenommen, wozu sie während der Abkühlung zwischen zwei kontinuierlich bewegten, endlos umlaufenden Preßbändern geführt wird. Dabei wird ein gleichmäßiger Flächendruck von den Druckplatten hydraulisch oder mechanisch auf die Innenseiten der sich bewegenden Preßbänder ausgeübt und von diesen auf die Thermoplastbahn übertragen. Die Druckplatten werden auf eine niedrigere Temperatur als die Endtemperatur der Thermoplastbahn gehalten, um so ein Temperaturgefälle zwischen Thermoplastbahn, Preßband und Druckplatte aufrechtzuerhalten. Die Abkühlung der Thermoplastbahn erfolgt, indem Wärme aus der Bahn über das Preßband auf die Druckplatten mittels Wärmeleitung abgeführt wird. Der Flächendruck wirkt während der gesamten Dauer der Abkühlung der Thermoplastbahn zwischen den Preßbändern ein.

Aufgabe der Erfindung ist es, eine Vorrichtung der eingangs beschriebenen Art so weiterzuentwickeln, daß eine kontinuierliche, kostensparende Fertigung eines plattenförmigen Bandes aus einem Folienverbund vorgegebener Dicke mit hoher Geschwindigkeit aus heißsiegelfähigen Kunststoffolien mit gegenüber extrudierten Folien gleicher Dicke wie der Folienverbund verbesserten mechanischen Eigenschaften und zumindest gleichbleibenden optischen Eigenschaften des Folienverbundes gegenüber der einzelnen Kunststoffolie ermöglicht wird.

Diese Aufgabe wird durch eine Vorrichtung nach der Erfindung derart gelöst, daß die Materialbänder miteinander siegelbare Kunststoffolienbänder sind, daß die Kunststoffolienbänder zwischen den beheizbaren Druckwalzen einem definiert einstellbaren Liniendruck ausgesetzt sind, daß zwischen den Vorratsrollen und den Druckwalzen Führungsrollen angeordnet sind, über die die Kunststoffolienbänder den Druckwalzen zugeführt sind und daß nahe jeder der Kontaktflächen der sich paarweise gegenüberliegenden Druckwalzen jeweils eine entlang einem Teilstück der Bahn des Kunststoffolienbandes verfahrbare, in ihrem Abstand zu der planen Laminier- bzw. Siegelstrecke einstellbare Heizeinrichtung zum definierten Verändern der mechanischen Eigenschaften der Kunststoffolienbänder und, wenn erforderlich, zum Anschmelzen von Siegelschichten der Kunststoffolienbänder angeordnet ist.

Die Weiterbildung der Vorrichtung nach der Erfindung ergibt sich aus den Merkmalen der Patentansprüche 2 bis 12.

Das Verfahren zum Herstellen eines mehrschichtigen Verbundes aus miteinander laminierten Materialbändern durch Siegeln unter Druck- und Wärmeanwendung, unter Verwendung der Vorrichtung gemäß Anspruch 1, zeichnet sich dadurch aus, daß der Verbund aus biaxial und/oder monoaxial verstreckten und/oder unverstreckten thermoplastischen Kunststoffolien, die zumindest einseitig mit einer Siegelschicht koextrudiert sind, besteht, und durch kontinuierliches, additives Aufsiegeln einzelner bewegter Kunststoffolienbänder auf ein bewegtes erstes Kunststoffolienband bis zu einer vorgegebenen Enddicke aufgebaut wird, wobei die Kunststoffolienbänder getrennt und im Abstand voneinander einer planen Siegelstrecke zugeführt und entlang dieser Siegelstrecke geführt werden, daß jedes Kunststoffolienband vor dem Eintritt in die plane Siegelstrecke zusätzlich erwärmt wird, um die mechanischen Eigenschaften der einzelnen Folienbänder gezielt zu beeinflussen und bei Bedarf die Siegelschichten der Kunststoffolienbänder anzuschmelzen, daß auf jedes der Kunststoffolienbänder unmittelbar an seiner Einlaufstelle in die Siegelstrecke Druck ausgeübt wird und daß der Folienverbund nach dem Austritt aus der Siegelstrecke durch Anblasen mit Kühlluft und/oder durch Kontakt mit Kühlwalzen und/oder einer temperierbaren Doppelbandpresse abgekühlt wird und ein- oder beidseitig geprägt wird.

Die Weiterbildung des Verfahrens ergibt sich aus den Merkmalen der Patentansprüche 14 bis 19.

Der Dickenaufbau eines Folienverbundes in Bandform durch kontinuierliches, additives Auflaminieren einzelner Kunststoffolienbänder wird erreicht, indem die Heißsiegelschichten der Kunststoffolienbänder unmittelbar vor dem Zusammenführen der Bänder kurzzeitig angeschmolzen und mittels Liniendruck verpreßt werden. Gegenüber dem zeitaufwendigen, herkömmlichen Verpressen eines kompakten Folienstapels in Plattenpressen bzw. dem Auslösen des für eine homogene Verbindung notwendigen thermischen Folienschrumpfes im Falle einer Rohrfertigung, ergeben sich bei der Erfindung die Vorteile, daß der Aufheiz- und Anschmelzvorgang der nur einige µm dicken Siegelschichten der Kunststoffolienbänder in extrem kurzer Zeit und damit auch unter weitgehender Vermeidung einer thermischen Schädigung des Kunststoffmaterials durchgeführt werden kann, daß bei dem kontinuierlichen Verfahen relativ hohe Geschwindigkeiten erreichbar sind und daß der Folienverbund als Bandware hergestellt wird, die problemlos zu Platten oder Dickfolien weiterverarbeitet werden kann. Im Gegensatz zum Pressen eines kompakten Folienstapels, in dem jede Folienlage ein anderes Temperaturprofil hat, erfolgt das Verpressen bei der Erfindung unter stets konstanten, schonenden Konditionen für jedes der einzelnen Kunststoffolienbänder. Im Vergleich zu dem Verpressen eines Folienstapels mittels einer Doppelbandpresse ergeben sich niedrigere Investitionskosten, eine höhere Verarbeitungsgeschwindigkeit und eine Vereinfachung der Variationsmöglichkeiten zur Strukturierung, Kalibrierung und der Weiterverarbeitung der Oberflächen des Folienverbundes.

Die Erfindung wird im folgenden anhand der Zeichnungen näher erläutert. Es zeigen:
- Figur 1: eine schematische Ansicht einer ersten Ausführungsform der Vorrichtung nach der Erfindung,
- Figur 2: eine schematische Ansicht einer zweiten Ausführungsform der Vorrichtung, mit einer Kühlanordnung und einer temperierbaren Doppelbandpresse für den Folienverbund,
- Figur 3: eine dritte Ausführungsform der Vorrichtung in schematischer Darstellung, mit Prägefolien zum Strukturieren der Oberflächen des Folienverbundes,
- Figur 4: eine vierte Ausführungsform der Vorrichtung, mit einer Prägestation aus Prägeband und Führungsplatte zum Strukturieren der Oberflächen des Folienverbundes,
- Figur 5: eine fünfte Ausführungsform der Vorrichtung mit einer Prägestation, zwischen deren Walzen der Folienverbund hindurchläuft und geprägt wird,
- Figur 6: eine gegenüber der Ausführungsform nach Fig. 5 leicht abgewandelte Prägestation, bei der der Folienverbund über Führungswalzen geführt ist und von diesen geprägt wird, und
- Figur 7: eine sechste Ausführungsform der Vorrichtung, bei welcher der Folienverbund in Planlage eine Kühlanordnung durchläuft.

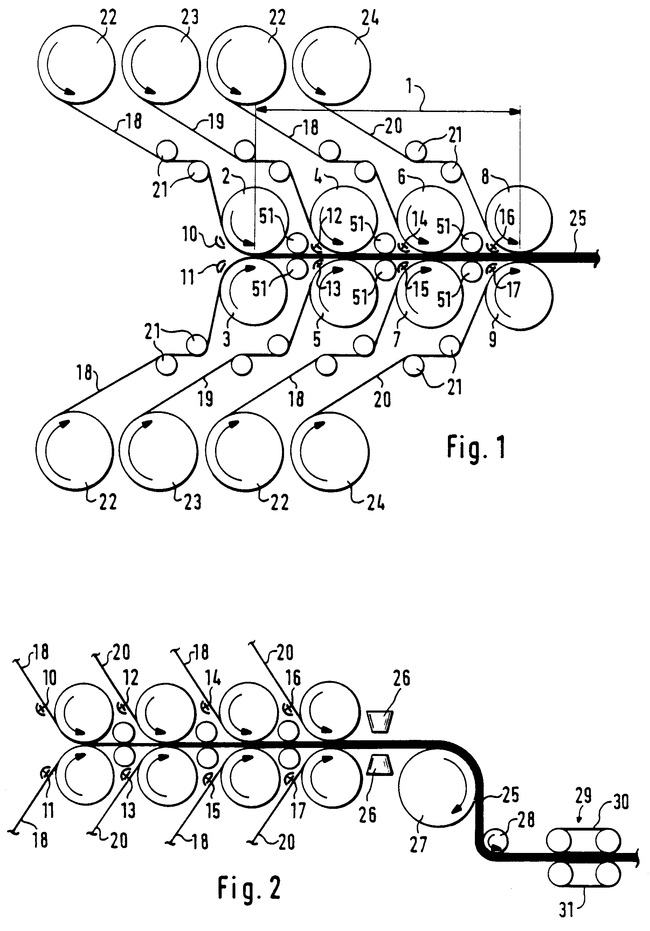

In Figur 1 ist in schematischer Schnittansicht eine erste Ausführungsform der Vorrichtung nach der Erfindung zum Herstellen eines mehrschichtigen Folienverbundes 25 dargestellt. Einer planen Siegelstrecke 1 wird eine Anzahl von Kunststoffolienbändern zugeführt, die miteinander gesiegelt werden. Bei diesen Kunststoffolienbändern, die auf Vorratsrollen 22, 23, 24 aufgewickelt sind, handelt es sich beispielsweise um biaxial verstreckte Kunststoffolienbänder 18, monoaxial verstreckte Kunststoffolienbänder 19 und unverstreckte Kunststoffolienbänder 20. Entlang der Siegelstrecke 1 sind in gleichgroßen oder unterschiedlichen Abständen zueinander beheizte Druckwalzen 2, 3 bis 9 paarweise angeordnet. Zwischen den paarweise einander gegenüberliegenden Druckwalzen können Transportrollen 51 in der Siegelstrecke 1 angeordnet sein, die sich gleichfalls paarweise gegenüberliegen, jedoch sind solche Transportrollen nicht in jedem Fall erforderlich. Bei sämtlichen in den Figuren 1 bis 7 dargestellten Ausführungsbeispielen der Vorrichtung nach der Erfindung sind aus Platzgründen nicht mehr als acht derartige Kunststoffolienbänder dargestellt, jedoch können beliebig viele, z.B. sechzig und mehr, einzelne Kunststoffolienbänder miteinander gesiegelt werden, die je zur Hälfte von oben und von unten in die Siegelstrecke eingebracht werden.

Wie Figur 1 zeigt, ist das einzelne, biaxial verstreckte Kunststoffolienband 18 auf einer Vorratsrolle 22 aufgewickelt, während jedes einzelne monoaxial verstreckte Kunststofffolienband 19 und jedes unverstreckte Kunststoffolienband 20 auf eine Vorratsrolle 23 bzw. 24 aufgewickelt ist. Es ist selbstverständlich, obgleich dies in Figur 1 nicht dargestellt ist, daß alle miteinander zu siegelnden Kunststoffolienbänder aus dem gleichen Kunststoff, beispielsweise Polypropylen mit der gleichen Veredelung, d.h. ausschließlich biaxial oder monoaxial verstreckt, zu dem Folienverbund 25 gesiegelt werden können. Es können selbstverständlich auch Folien aus unterschiedlichen Ausgangsmaterialien zu einem Folienverbund gesiegelt werden. Voraussetzung ist lediglich die Siegelbarkeit der Einzelfolien untereinander. Das einzelne Kunststoffolienband wird über Führungsrollen 21 der zugehörigen Druckwalze 2, 3, ... oder 9 zugeführt. Bei diesen Druckwalzen handelt es sich um angetriebene, temperierbare Walzen Die Kunststoffolienbänder sind ein- oder beidseitig mit Siegelschichten ausgestattet, die während des Siegelvorgangs der Kunststoffolienbänder angeschmolzen werden, wie nachstehend noch näher erläutert werden wird. Bei den Druckwalzen 2 bis 9 handelt es sich beispielsweise um Presseure, deren Metallwalzenkörper mit temperaturbeständigen Gummischichten belegt sind und die über nicht dargestellte Heizsysteme beheizt werden. Ebenso können die Führungsrollen 21, die den einzelnen Presseuren vorgeschaltet sind, vorgeheizt sein, so daß die von den Vorratsrollen den Presseuren zugeführten Kunststoffolienbahnen schon aufgeheizt sind. Die Druckwalzen bzw. Presseure 2 bis 9 sind hydraulisch, pneumatisch oder mechanisch über ein Hebelsystem verfahrbar, so daß sie voneinander abgehoben werden können, um das Einführen des einzelnen Kunststoffolienbandes zwischen den paarweise zueinander angeordneten Druckwalzen zu erleichtern. Die Druckwalzen können auch reine Metallwalzen ohne Gummibeschichtung sein.

Die Positionierung der Druckwalzen bzw. der Presseure bzw. das Aufbringen des Drucks, mit dem die gegenüberliegenden Druckwalzen gegeneinander gepreßt werden und so einen entsprechenden Siegeldruck (Liniendruck) ausüben, um das jeweilige Kunststoffolienband auf den schichtmäßig anwachsenden Folienverbund zu siegeln, kann, wie schon erwähnt, entweder hydraulisch, pneumatisch oder durch einen Hebelmechanismus geschehen.

Nahe der Kontaktfläche der einzelnen Druckwalzenpaare ist jeweils eine verfahrbare Heizeinrichtung 10, 11, ... 17 zum gezielten Verändern der mechanischen Eigenschaften der Ausgangsfolie, z.B. durch Schrumpfen und, wenn nötig, zusätzlich zu den beheizten Walzen, zum Anschmelzen der Siegelschichten der Kunststoffolienbänder angeordnet. Bei dieser Heizeinrichtung handelt es sich insbesondere um Infrarotstrahler, die entlang einem Teilstück der Bahn des Kunststoffolienbandes verfahrbar sind. Diese Heizeinrichtungen können auch mit Heißluft beaufschlagbare Luftdüsen sein, die das Anschmelzen der Siegelschichten der Kunststoffolienbänder bzw. einen Schrumpf der Folienbänder unmittelbar vor dem Zusammenführen zwischen dem jeweiligen Druckwalzenpaar bewirken. In Figur 2 sind die Heizeinrichtungen 10 bis 17 in Positionen außerhalb der Spalten der Presseure dargestellt. Der Abstand der Heizeinrichtungen zu der Siegelstrecke 1 ist gleichfalls einstellbar.

Die schwerpunktmäßig herausgehobene Verwendung koextrudierter biaxial oder monoaxial verstreckter, mit Siegelschichten ausgerüsteter Kunststoffolienbänder für das Laminieren bzw. Siegeln zu einem Folienverbund bedeutet keine Einschränkung der Erfindung auf diese Ausgangsmaterialien. Eine praktische Alternative zur Herstellung eines Folienverbundes aus koextrudierten Kunststoffsiegelbändern ergibt sich durch ein schichtmäßiges Siegeln von materialmäßig absolut identischen Monofolien, die nicht verstreckt sind und sich einzig und allein durch ihren Orientierungsgrad und die daraus resultierende morphologische Struktur unterscheiden. Gegenüber unverstreckten Monofolien weisen mono- oder biaxial verstreckte Folien eine andere morphologische Struktur auf, die sich u.a. in differierenden Schmelztemperaturen der Kunststoffolien niederschlägt. Dies läßt sich dahingehend nutzen, daß in einem Folienverbund, bestehend aus alternierend geschichteten unverstreckten und verstreckten Kunststofffolienbändern, die unverstreckten Kunststoffolienbänder bei den üblichen Verarbeitungsbedingungen bereits anschmelzen und dadurch Haftvermittlerfunktionen gegenüber den bei den Druck- und Wärmebedingungen des Siegelvorgangs noch nicht schmelzenden, verstreckten Kunststoffolienbändern übernehmen. Mit anderen Worten bedeutet dies, daß bei einer derartigen alternierenden Schichtung von verstreckten und unverstreckten Kunststofffolienbändern keines der Bänder Siegelschichten aufweisen muß und sie trotzdem miteinander laminiert werden können. Die Dicke des geschichteten Folienverbundes 25 liegt im Bereich von 50 µm bis zu Plattendicken von mehreren mm.

Die in Figur 2 gezeigte zweite Ausführungsform der erfindungsgemäßen Vorrichtung ist in bezug auf die Siegelstrecke 1, die Druckwalzen bzw. Presseure 2 bis 9 und die Zuführung der Kunststoffolienbänder 18 und 20 ähnlich aufgebaut wie die erste Ausführungsform nach Figur 1. Aus Platzgründen sind bei dieser Ausführungsform die Vorratsrollen für die Kunststoffolienbänder weggelassen. Es werden beispielsweise mit dieser Vorrichtung biaxial verstreckte Kunststofffolienbänder 18 alternierend mit unverstreckten Kunststoffolienbändern 20 zu dem Folienverbund 25 gesiegelt bzw. laminiert. Diese Ausführungsform der Vorrichtung ist mit Zusatzaggregaten ausgerüstet, wie beispielsweise einer Kühleinrichtung aus Ventilatoren oder Luftdüsen 26, aus denen Kühlluft auf die Oberseite und/oder Unterseite des Folienverbunds 25 geblasen wird, und aus einer temperierbaren Kühlwalze 27, über die der Folienverbund 25 entlang einem Teilumfang nach dem Austritt aus der Siegelstrecke 1 geführt ist. Nach der Kühlwalze 27 ist eine Umlenkwalze 28 vorgesehen, durch welche der Folienverbund 25 aus seiner Vertikalrichtung in eine Horizontalrichtung umgelenkt wird, um anschließend eine temperierbare Doppelbandpresse 29 zu durchlaufen, die aus zwei endlos umlaufenden Preßbändern 30 und 31 besteht, die eine gemeinsame Kontaktfläche bilden, durch die der Folienverbund 25 hindurchläuft. Mit Hilfe dieser Doppelbandpresse 29 kann sowohl die Ober- als auch die Unterseite des Folienverbunds 25 in einer vorgegebenen Weise gekühlt, strukturiert oder auch geglättet werden.

Bei dieser Ausführungsform der Vorrichtung kann jede Kühleinrichtung allein, ohne Doppelbandpresse, oder die Doppelbandpresse allein, ohne Kühleinrichtung zum Einsatz kommen.

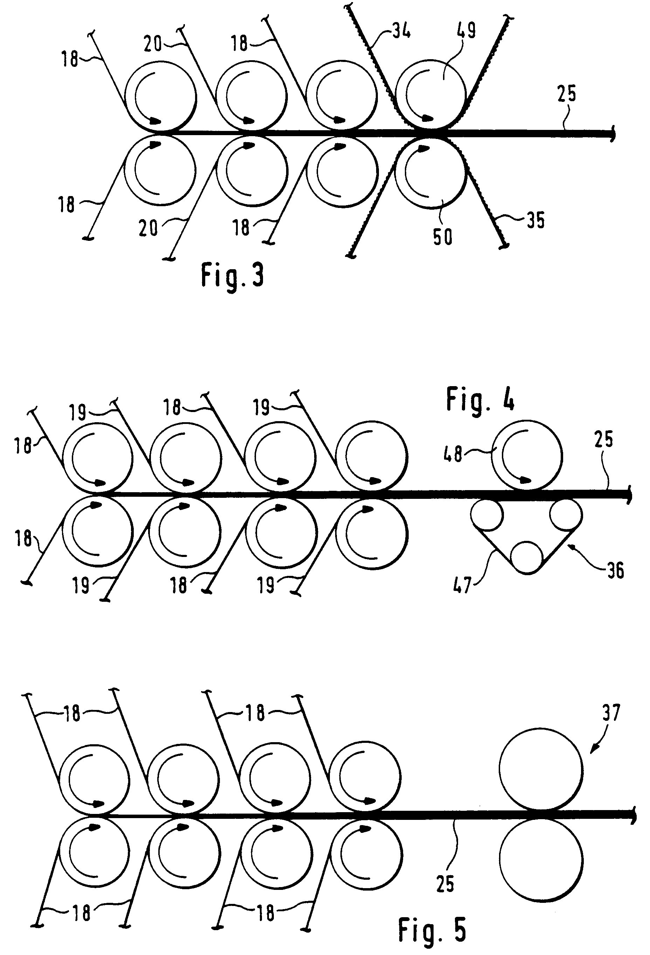

In den Figuren 3 bis 6 sind verschiedene Prägeeinrichtungen für den Folienverbund 25 dargestellt. Bei der in Figur 3 gezeigten dritten Ausführungsform der Vorrichtung sind zwei Prägefolien 34 und 35 am Ende der Siegelstrecke 1 vorhanden, die über Teilumfänge von Walzen 49, 50 geführt sind. Die Vorratsrollen für diese Prägefolien sowie für die Kunststoffolienbänder sind aus Gründen der besseren Übersichtlichkeit weggelassen worden. Die obere Prägefolie 34 läuft von der nicht gezeigten Vorratsrolle über die Walze 49 auf den schichtmäßig aufgebauten Folienverbund 25 auf. Die untere Prägefolie 35 gelangt über die Walze 50 mit dem mehrschichtigen Folienverbund 25 in Berührung. Die Prägefolien sind um Teilumfänge der Walzen 49, 50 herumgeführt und prägen die Ober- und Unterseite des Folienverbundes. Danach werden die Prägefolien von dem Folienverbund 25 abgelöst und auf nicht gezeigte Aufwickelrollen aufgerollt.

Die vierte Ausführungsform der Vorrichtung, wie sie in Figur 4 schematisch gezeigt ist, weist eine Prägestation 36 mit einem über Rollen endlos umlaufenden Prägeband 47 und einer glatten oder strukturierten Führungswalze 48 auf. Mit Hilfe dieses beispielsweise metallischen Prägebandes 47 ist es möglich, nur eine Seite des Folienverbundes 25 durch das Prägeband 47 zu strukturieren, während die andere Seite unstrukturiert bleibt, wenn beispielsweise die Walze 48 eine glatte Oberfläche hat. Die übrigen Einzelteile dieser Vorrichtung zum Zuführen der einzelnen Kunststoffolienbänder sind die gleichen wie bei den Ausführungsformen der Vorrichtung nach den Figuren 1 bis 3 und werden daher nicht nochmals beschrieben. Beispielsweise erfolgt die Prägung der Unterseite mit Hilfe des Prägebandes 47 in der Weise, daß der Folienverbund zwischen dem Prägeband 47 und der Führungswalze 48 hindurchläuft, wobei das Prägeband den Folienverbund gegen die Führungswalze andrückt. Wenn die Oberfläche der Walze 48 strukturiert ist, wird auch die Oberseite des Folienverbundes geprägt.

Nachdem der Folienverbund 25 die Siegelstrecke 1 durchlaufen hat, kann noch eine Kühlbehandlung in einer entsprechenden Kühlanordnung, die nicht gezeigt ist, vorgenommen werden.

Bei der in Figur 5 gezeigten fünften Ausführungsform der erfindungsgemäßen Vorrichtung ist für das beidseitige Prägen des Folienverbunds 25 eine Prägestation 37, die zwei Prägerollen umfaßt, in Laufrichtung des Folienverbundes 25 nach der Siegelstrecke 1 angeordnet. Der Folienverbund 25 durchläuft nach der Siegelstrecke 1 die Walzenanordnung, bestehend aus den beiden Prägerollen der Prägestation 37, in der gezeigten Weise, so daß die Ober- und Unterseite des Folienverbundes 25 eine entsprechende Strukturierung erfahren.

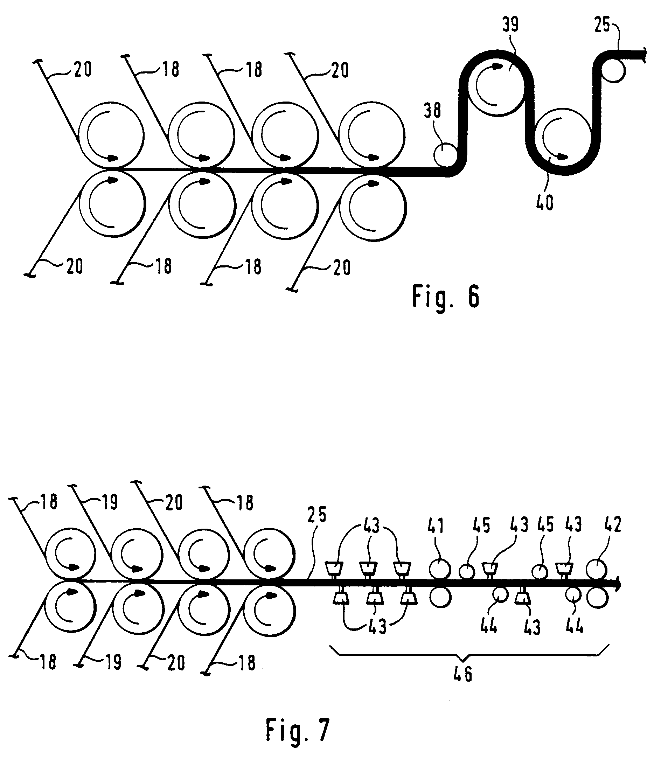

Eine andere Möglichkeit der Oberflächenstrukturierung des Folienverbundes 25 ergibt sich mit der in Figur 6 dargestellten Vorrichtung. Hierzu wird der Folienverbund 25 mit hoher Zugspannung nach dem Durchlaufen der Siegelstrecke 1 über eine Umlenkrolle 38 und in Mäanderform über temperierbare Walzen 39 und 40 gezogen, die in Vertikalrichtung zueinander versetzt sind. Die Oberflächen der Walzen 39 und 40 sind entweder hochglanzpoliert oder strukturiert. Durch die hohe Zugspannung, die auf den Folienverbund 25 durch die entsprechende Antriebsgeschwindigkeit der Walzen ausgeübt wird, kommt es zu einer entsprechenden Strukturierung der beiden Seiten des Folienverbundes 25.

In Figur 7 ist eine Kühlanordnung 46 bzw. Kühlstrecke gezeigt, die nach der Siegelstrecke 1 angeordnet ist. Eine derartige Kühlanordnung 46 kann bei allen Ausführungsformen, wie sie in den voranstehenden Figuren 1 bis 6 gezeigt sind, vorhanden sein. Die Kühlanordnung 46 besteht in einem Abschnitt aus einer Anzahl von Ventilatoren 43 oder Luftdüsen, die mit Kühlluft beaufschlagt werden, und oberhalb und/oder unterhalb des in Planlage transportierten Folienverbundes 25 angebracht sind. Desweiteren umfaßt die Kühlanordnung 46 in einem weiteren Abschnitt untere Kühlwalzen 44, über die der Folienverbund 25 transportiert wird, und obere Kühlwalzen 45, die mit der Oberseite des Folienverbundes 25 in Kontakt stehen. Die Kühlwalzen 44 und 45 sind zueinander versetzt, so daß sie alternierend mit der Ober- und Unterseite des Folienverbundes 25 in Berührung stehen. In diesem Abschnitt sind oberhalb und unterhalb des Folienverbundes 25 gleichfalls Ventilatoren 43 vorhanden. Am Anfang und am Ende dieses Abschnitts sind Abzugsrollenpaare 41, 42 für den Transport des Folienverbundes vorgesehen.

Im folgenden wird die Betriebsweise der einzelnen Ausführungsformen der Erfindung näher beschrieben. Die einzelnen Kunststoffolienbänder 18 bis 20 sind auf Vorratsrollen 22, 23 und 24 aufgewickelt und werden über Führungsrollen 21 der Siegelstrecke 1 zugeführt. Die in Figur 1 an der Eintrittsstelle auf der linken Seite der Siegelstrecke 1 zugeführten biaxial verstreckten Kunststoffolienbänder 18 besitzen beispielsweise nur an ihren einander abgewandten Seiten eine Siegelschicht, die durch den Kontakt mit der Walze 3 bzw. durch die Walze 2 und, wenn nötig, zusätzlich durch die Heizeinrichtung 10 angeschmolzen wird. In einem bestimmten Abstand von der Einlaufstelle der beiden Kunststoffolienbänder 18 in die Siegelstrecke 1 befindet sich die Einlaufstelle für die von oben und unten zugeführten monoaxial verstreckten Kunststoffolienbänder 19, die gleichfalls erwärmt werden. Diese Kunststoffolienbänder 19 können entweder ohne Siegelschichten oder mit Siegelschichten ausgerüstet sein und werden unter Druckanwendung durch die Druckwalzen 4, 5 auf die schon gesiegelten beiden Kunststoffolienbänder 18 aufgesiegelt. Die nächste Einlaufstelle für weitere Kunststoffolienbänder 18 in die Siegelstrecke 1 befindet sich nicht notwendigerweise im gleichen Abstand von den Druckwalze 4, 5 entfernt, der zwischen den beiden Druckwalzenpaaren 4, 5 und 2, 3 vorhanden ist. Diese weiteren Kunststoffolienbänder 18 werden gleichfalls durch Walzenkontakt und, wenn nötig, durch die Heizeinrichtungen 14, 15 wärmebehandelt und durch den ausgeübten Liniendruck der Druckwalzen 6, 7 auf die vier schon miteinander gesiegelten Kunststoffolienbänder 18 und 19 auflaminiert. Auf die gleiche Weise werden dann noch die unverstreckten Kunststoffolienbänder 20 unter Druck und Wärmeanwendung auf die schon miteinander gesiegelten Kunststoffolienbänder zu dem endgültigen Folienverbund 25 aufgesiegelt.

Auf diese Art und Weise kann beispielsweise ein Folienverbund aus bis zu sechzig und mehr Einzelfolien aus Polypropylen aufgebaut werden, wobei die Einzelfolien biaxial und/oder monoaxial verstreckt und/oder unverstreckt, thermoplastisch, und ein- oder beidseitig mit Siegelschichten ausgerüstet sein können. Desweiteren können die Einzelfolien druckvorbehandelt oder nicht vorbehandelt sein. Bei dem Verfahren können gleichartige oder unterschiedliche Kunststoffolienbänder miteinander gesiegelt werden. Das bezieht sich sowohl auf veredelte als auch nicht-veredelte Ausgangsfolien. Als Ausgangsfolien können ebenso Metallfolien allein oder im Verbund mit Kunststoffolien, Papierbahnen oder sonstigen Materialien, die nicht aus Kunststoff bestehen, verwendet werden. Bei der Wärmeanwendung muß beachtet werden, daß die Siegeltemperatur unterhalb der Schmelztemperatur der einzelnen Kunststoffolienbänder gehalten werden muß, wobei im allgemeinen die unverstreckten Folienbänder gegenüber den verstreckten Folienbändern eine niedrigere Schmelztemperatur besitzen.

Durch das Erwärmen jedes Kunststoffolienbandes beim Einlaufen in die Siegelstrecke 1 werden die Siegelschichten der Kunststoffolienbänder angeschmolzen. Die benötigte Siegeltemperatur liegt, je nach dem Siegelrohstoff, zwischen 90 ° und 140 °C. Da die Siegeltemperatur stets unterhalb der Schmelztemperatur von z.B. Polypropylen gehalten wird, werden die in den einzelnen Kunststoffolienbändern vorhandenen Orientierungen durch die Verstreckung auch nach dem Siegeln beibehalten. Durch eine zusätzliche Erwärmung bzw. Abkühlung des Folienverbundes oder eine Wärmebehandlung der Ausgangsfolien, was z.B. ein Schrumpfen bewirken kann, können primär die mechanischen Eigenschaften des Folienverbundes definiert eingestellt werden.

Nach dem Austritt aus der Siegelstrecke 1 wird der Folienverbund 25 nach Figur 1 über nicht gezeigte Führungswalzen geführt und anschließend zu Platten oder Dickfolien geschnitten oder aufgewickelt, um für eine Weiterverarbeitung bereitgehalten zu werden.

Bei den in den Figuren 2 bis 7 gezeigten Ausführungsformen der Vorrichtung wird der Folienverbund 25 nach dem Durchlaufen der Siegelstrecke 1 zusätzlichen Verfahrensschritten unterzogen, wie beispielsweise mit Kühlluft von oben und unten durch Ventilatoren 26 in Figur 2 angeblasen und durch Kontakt mit der temperierbaren Kühlwalze 27 und/oder der gekühlten Doppelbandpresse 29 abgekühlt. Anstelle der Ventilatoren 26 können auch Luftdüsen verwendet werden, durch die Kühlluft auf die Ober- und/oder Unterseite des Folienverbundes 25 geblasen wird. Eine andere Möglichkeit der Kühlung besteht im Durchlaufen eines Kühlbades. Eine intensive Kühlung bei horizontalem Folienverbundlauf kann auch mit der Vorrichtung nach Figur 7 erfolgen, bei der in Kombination temperierbare Kühlwalzen und Ventilatoren bzw. Luftdüsen, durch die Kühlluft auf die obere und/oder untere Oberfläche des Folienverbundes geblasen wird, zusammenwirken. Durch das Abkühlen des Folienverbundes 25 wird seine Planlage verbessert.

Weitere Verfahrensmaßnahmen zur Behandlung des Folienverbundes 25 schließen eine ein- oder beidseitige Prägung des Folienverbundes ein, wobei unterschiedliche Prägemaßnahmen getroffen werden können. Mit den Zusatzaggregaten gemäß den Figuren 3 bis 6 werden diese Prägungsverfahrensschritte durchgeführt. Eine einseitige Prägung der Unterseite des Folienverbundes 25 erfolgt mit dem endlos, geschlossen umlaufenden Prägeband 47 aus Metall und der Führungswalze 48, wie dies in Figur 4 dargestellt und anhand dieser Figur beschrieben ist. Eine beidseitige Prägung des Folienverbundes 25 wird in der Prägestation 37 vorgenommen, die aus den zwei Prägerollen besteht, zwischen denen der Folienverbund 25, wie in Figur 5 gezeigt, hindurchläuft. Ebenso ist eine beidseitige Prägung des Folienverbundes 25 mit Hilfe der beiden Prägefolien 34 und 35 durchführbar, wie dies in Figur 3 dargestellt ist. Diese beiden Prägefolien sind über Walzen 49, 50 geführt und werden von diesen Walzen an die Ober- und Unterseite des Folienverbundes 25 angedrückt. Durch die entsprechende Druckanwendung auf die anliegenden Prägefolien durch die Walzen werden die Unter- und die Oberseite des Folienverbundes 25 gemäß den Mustern der Prägefolien strukturiert.

Eine andere Verfahrensmaßnahme zum Strukturieren des Folienverbundes 25 besteht bei der Vorrichtung nach Figur 6 darin, den Folienverbund mäanderartig über antreibbare und temperierbare, strukturierte Walzen 39, 40 zu führen und durch die regelbare Umlaufgeschwindigkeit dieser Walzen eine variable Zugspannung auf den Folienverbund 25 auszuüben, wodurch es gleichfalls zu einer Strukturierung der Oberflächen des Folienverbundes kommt.

Die Folienverbunde können als Ausgangsmaterial zur Herstellung mehrlagiger Dickfolien oder Platten verwendet werden, indem anstelle der einzelnen Kunststoffolienbänder derartige Folienverbunde nach den voranstehend beschriebenen Verfahrensschritten miteinander gesiegelt werden.

## Patentansprüche

1. Vorrichtung zum Herstellen eines mehrschichtigen Verbundes aus miteinander laminierten Materialbändern, mit einer Anzahl von Vorratsrollen, auf denen die bandförmigen Materialen aufgewickelt sind, die über paarweise einander gegenüberliegende, miteinander in Kontakt stehende Druckwalzen in eine horizontale plane Laminierstrecke umlenkbar sind, wobei die in gleichen oder unterschiedlichen Abständen voneinander in die plane Laminierstrecke umgelenkten, übereinandergeschichteten Materialbänder unter Druck- und Wärmeanwendung durch die Druckwalzen miteinander zu dem Verbund siegelbar sind und an die Laminierstrecke zumindest eine Kühl-, Präge- und/oder Preßeinrichtung anschließt, dadurch gekennzeichnet, daß die Materialbänder miteinander siegelbare Kunststoffolienbänder sind, die zwischen den beheizbaren Druckwalzen (2, 3, 4, ...8, 9, ...) einem definiert einstellbaren Liniendruck ausgesetzt sind, daß zwischen den Vorratsrollen und den Druckwalzen Führungsrollen (21) angeordnet sind, über die die Kunststoffolienbänder den Druckwalzen zugeführt sind und daß nahe jeder der Kontaktflächen der sich paarweise gegenüberliegenden Druckwalzen (2, 3; 4, 5; 6, 7; 8, 9; ...) jeweils eine entlang einem Teilstück der Bahn des Kunststoffolienbandes verfahrbare, in ihrem Abstand zu der planen Laminier- bzw. Siegelstrecke (1) einstellbare Heizeinrichtung (10, 11, ...17, ...) zum definierten Verändern der mechanischen Eigenschaften der Kunststoffolienbänder und, wenn erforderlich, zum Anschmelzen von Siegelschichten der Kunststoffolienbänder angeordnet ist.

2. Vorrichtung nach Anspruch 1, dadurch gekennzeichnet, daß die Anzahl der siegelfähigen Kunststoffolienbänder kleiner/gleich der Anzahl der Druckwalzen ist, die 60 Stück und mehr beträgt.

3. Vorrichtung nach Anspruch 1, dadurch gekennzeichnet, daß die paarweise einander gegenüberliegenden Druckwalzen hydraulisch, pneumatisch oder mechanisch unterschiedlich stark gegeneinander andrückbar sind, um einen variablen Liniendruck auf das einzelne Kunststoffolienband auszuüben, das auf die schon miteinander gesiegelten Kunststoffolienbänder aufgesiegelt wird.

4. Vorrichtung nach Anspruch 1, dadurch gekennzeichnet, daß die einzelne Druckwalze ein beheizter- Presseur mit einem Metallkörper und einer Gummibeschichtung ist.

5. Vorrichtung nach Anspruch 1, dadurch gekennzeichnet, daß die einzelne Druckwalze eine hochglanzpolierte Metallwalze ohne Gummibeschichtung ist.

6. Vorrichtung nach Anspruch 1, dadurch gekennzeichnet, daß die einzelne Heizeinrichtung (10, 11, ...17, ...) ein entlang dem Kunststoffolienband verfahrbarer Infrarotstrahler ist.

7. Vorrichtung nach Anspruch 1, dadurch gekennzeichnet, daß der Folienverbund (25) nach dem Austritt aus der planen Siegelstrecke (1) eine Kühlanordnung aus einem Ventilator (26) und einer temperierbaren Kühlwalze (27) und/oder eine temperierbare Doppelbandpresse (29) durchläuft.

8. Vorrichtung nach Anspruch 1, dadurch gekennzeichnet, daß in Laufrichtung des Folienverbundes (25) nach der Siegelstrecke (1) eine Prägestation (35) mit einem endlos umlaufenden Prägeband (47), das mit einer gegenüberliegenden Führungswalze (48) in Kontakt bringbar ist, angeordnet ist und daß der Folienverbund (25) zwischen der Führungswalze (48) und dem Prägeband (47) hindurchgeführt ist, das die ihm zugewandte Seite des Folienverbundes prägt.

9. Vorrichtung nach Anspruch 1, dadurch gekennzeichnet, daß der Folienverbund (25) zwischen zwei, einander am Ausgang der Siegelstrecke (1) gegenüberliegende Walzen (49, 50) hindurchführbar ist, über die Prägefolien (34, 35) geführt sind und daß die Prägefolien die Unter- und Oberseite des Folienverbundes mit einer Prägung versehen und um Teilumfänge der Walzen herumgeführt sind und nach dem Prägevorgang aufgerollt werden.

10. Vorrichtung nach Anspruch 1, dadurch gekennzeichnet, daß der Folienverbund (25) nach der Siegelstrecke (1) zwischen zwei Prägerollen einer Prägestation (37) hindurchläuft.

11. Vorrichtung nach einem oder mehreren Ansprüchen 1 bis 10, dadurch gekennzeichnet, daß der Folienverbund (25) mit hoher Zugspannung in Mäanderform über temperierbare Walzen (39, 40) geführt ist, die in Vertikalrichtung zueinander versetzt sind und deren Oberflächen hochglanzpoliert oder strukturiert sind und die nach der Siegelstrecke (1) angeordnet sind.

12. Vorrichtung nach einem oder mehreren der Ansprüche 1 bis 6, dadurch gekennzeichnet, daß der Folienverbund (25) nach dem Austritt aus der Siegelstrecke (1) in Planlage eine Kühlanordnung (46) durchläuft, die aus einer Anzahl von Ventilatoren (41) und/oder Kühlwalzen (44, 45) besteht, die zueinander versetzt, alternierend mit der Ober- und Unterseite des Folienverbundes (25) in Kontakt stehen.

13. Verfahren zum Herstellen eines mehrschichtigen Verbundes aus miteinander laminierten Materialbändern durch Siegeln unter Druck- und Wärmeanwendung, unter Verwendung der Vorrichtung gemäß Anspruch 1, dadurch gekennzeichnet, daß der Verbund aus biaxial und/oder monoaxial verstreckten und/oder unverstreckten thermoplastischen Kunststoffolien, die zumindest einseitig mit einer Siegelschicht koextrudiert sind, besteht und durch kontinuierliches, additives Aufsiegeln einzelner bewegter Kunststoffolienbänder auf ein bewegtes erstes Kunststoffolienband bis zu einer vorgegebenen Enddicke aufgebaut wird, wobei die Kunststoffolienbänder getrennt und im Abstand voneinander einer planen Siegelstrecke zugeführt und entlang dieser Siegelstrecke geführt werden, daß jedes Kunststoffolienband vor dem Eintritt in die plane Siegelstrecke zusätzlich erwärmt wird, um die mechanischen Eigenschaften der einzelnen Folienbänder gezielt zu beeinflussen und bei Bedarf die Siegelschichten der Kunststoffolienbänder anzuschmelzen, daß auf jedes der Kunststoffolienbänder unmittelbar an seiner Einlaufstelle in die Siegelstrecke Druck ausgübt wird, und daß der Folienverbund nach dem Austritt aus der Siegelstrecke durch Anblasen mit Kühlluft und/oder durch Kontakt mit Kühlwalzen und/oder einer temperierbaren Doppelbandpresse abgekühlt wird und ein- oder beidseitig geprägt wird.

14. Verfahren nach Anspruch 13, dadurch gekennzeichnet, daß gleichartige oder unterschiedliche Kunststoffolienbänder miteinander gesiegelt werden.

15. Verfahren nach Anspruch 14, dadurch gekennzeichnet, daß die abwechselnd aufeinandergeschichteten mono- und/oder biaxial verstreckten sowie unverstreckten Monofolienbänder aus demselben Polymerwerkstoff miteinander versiegelt werden, wobei die unverstreckten Folienbänder gegenüber den verstreckten Folienbändern eine niedrigere Schmelztemperatur aufweisen.

16. Verfahren nach Anspruch 13, dadurch gekennzeichnet, daß die Siegeltemperatur unterhalb der Schmelztemperatur der einzelnen Kunststoffolienbänder gehalten wird.

17. Verfahren nach einem oder mehreren der Anspräche 13 bis 16, dadurch gekennzeichnet, daß die Behandlungsschritte Kühlen durch Kühlluft, Kontakt mit Kühlwalzen und/oder einer gekühlten Doppelpresse und Prägen des Folienverbundes nach seinem Austritt aus der Siegelstrecke in allen möglichen Kombinationen vorgenommen werden.

18. Verfahren nach Anspruch 13, dadurch gekennzeichnet, daß als Ausgangsmaterial für den Folienverbund zusätzlich zu den Kunststoffolienbändern Bänder aus anderen Materialien als Kunststoff und Verbunde solcher Bänder mit Kunststoffolien kontinuierlich mit den Kunststoffolienbändern gesiegelt werden.

19. Verfahren zum Herstellen einer mehrlagigen Dickfolie oder einer Platte aus Folienverbunden, bei dem anstelle einzelner Kunststoffolienbänder als Ausgangsmaterial mehrschichtige Folienverbunde miteinander gesiegelt werden, die nach einem oder mehreren der Ansprüche 14 bis 22 hergestellt sind.

## Claims

1. An apparatus for producing a multilayered composite from laminated material tapes, said apparatus comprising a plurality of supply rolls, on which the materials in tape form are wound, which tapes of materials can be deflected into a horizontal, plane laminating zone, by means of compression rolls which lie opposite each other in pairs and are in contact with each other, whereby the super-imposed tapes of material deflected into the plane laminating zone at equal or different mutual distances can be sealed with application of pressure and heat to give the composite and at least one cooling, embossing and/or pressing device adjoins the laminating zone, characterized in that the tapes of material are plastics film tapes which can be mutually sealed and which are subjected to a linear pressure which can be set to a defined value between the heatable compression rolls (2, 3, 4, ...8, 9, ...), that guide rolls (21) are provided between the supply rolls and the compression rolls, the plastics film tapes being conveyed to the compression rolls over said guide rolls, and in that close to the contact surfaces of the compression rolls (2, 3; 4,5; 6,7; 8,9; ...) arranged opposite each other in pairs there is located in each case a heating device (10, 11, ... 17, ...) which can be moved along a section of the of the path of the plastics film tape and whose distance from the plane laminating or sealing zone (1) can be adjusted, for a defined changing of the mechanical properties of the plastics film tapes and, if necessary, for incipient melting of sealing layers of the plastics film tapes.

2. The apparatus as claimed in claim 1, wherein the number of sealable plastics film tapes is less than/equal to the number of compression rolls, of which there are 60 and more.

3. The apparatus as claimed in claim 1, wherein the compression rolls lying opposite each other in pairs can be pressed hydraulically, pneumatically or mechanically against each other to varying degrees in order to exert a variable linear pressure on the individual plastics film tape which is being sealed onto the already sealed-together plastics film tapes.

4. The apparatus as claimed in claim 1, wherein the individual compression roll is a heated impression cylinder having a metal body and a rubber covering.

5. The apparatus as claimed in claim 1, wherein the individual compression roll is a highly polished metal roll without rubber covering.

6. The apparatus as claimed in claim 1, wherein the individual heating device (10, 11, ...17, ...) is an infrared radiator which can be moved along the plastics film tape.

7. The apparatus as claimed in claim 1, whrein, after leaving the plane sealing zone (1), the film composite (25) runs through a cooling arrangement comprising a fan (26) and a temperature-controllable cooling roll (27) and/or a temperature-controllable twin-belt press (29).

8. The apparatus as claimed in claim 1, wherein there is arranged downstream of the sealing zone (1), in the running direction of the film composite (25), an embossing station (35) with an endlessly circulating embossing band (47), which can be brought into contact with an opposite guide roll (48), and wherein the film composite (25) is led through between the guide roll (48) and the embossing band (47), which embosses the side of the film composite facing it.

9. The apparatus as claimed in claim 1, wherein the film composite (25) can be led through between two rolls (49, 50) lying opposite each other at the exit of the sealing zone (1), over which rolls the embossing foils (34, 35) are guided, and wherein the embossing foils provide the underside and upper side of the film composite with an embossing and are guided around parts of the circumference of the rolls and, after the embossing operation, are rolled up.

10. The appratus as claimed in claim 1, wherein, downstream of the sealing zone (1), the film composite (25) runs through between two embossing rolls of an embossing station (37).

11. The apparatus as claimed in one or more of claims 1 to 10, wherein the film composite (25) is guided with high tension in a meandering form over temperature-controllable rolls (39, 40), which are offset with respect to each other in the vertical direction and the surfaces of which are highly polished or textured and which are arranged downstream of the sealing zone (1).

12. The apparatus as claimed in one or more of claims 1 to 6, wherein, after leaving the sealing zone (1), the film composite (25) runs in a flat position through a cooling arrangement (46), which comprises a number of fans (41) and/or cooling rolls (44, 45) which, offset with respect to one another, are alternately in contact with the upper side and underside of the film composite (25).

13. A process for producing a multilayered composite of laminated tapes of material by sealing with application of heat and pressure, using the apparatus as claimed in claim 1, characterized in that said composite is comprised of biaxially and/or monoaxially stretched and/or unstretched thermoplastic plastics films which are provided with a sealing layer on at least one side by coextrusion, and that said composite is built up to a given final thickness by continuous, additive sealing of individual, moved plastics film tapes onto a moved first plastics film tape, said plastics film tapes being fed separately and at a distance from one another to a plane sealing zone and being guided along said sealing zone, that each plastics film tape is additionally heated before entry into the plane sealing zone, in order to influence selectively the mechanical properties of the individual film tapes and, if need be, begin melting of the sealing layers of the plastics film tapes, that pressure is exerted on each of the plastics film tapes directly at its point of entry into the sealing zone, and that, after leaving the sealing zone, the film composite is cooled by blowing with cooling air and/or by contact with cooling rolls and/or a temperature-controllable twin-belt press, and is embossed on one or both sides.

14. The process as claimed in claim 13, wherein like or unlike plastics film tapes are sealed together.

15. The process as claimed in claim 14, wherein the alternately layered monoaxially and/or biaxially stretched and unstretched monofilm tapes of the same polymer material are sealed together, the unstretched film tapes having a lower melting temperature than the stretched film tapes.

16. The process as claimed in claim 13, wherein the sealing temperature is kept below the melting temperature of the individual plastics frilm tapes.

17. The process as claimed in one or more of claims 13 to 16, wherein the treatment steps of cooling the film composite by means of cooling air, contact with cooling rolls and/or with a cooled twin-belt press, and embossing the film composite are performed in all possible combinations after the composite leaves the sealing zone.

18. The process as claimed in claim 13, wherein, as starting material for the film composite, in addition to the plastics film tapes, bands of other materials than plastics and composites of such bands with plastics films are continuously sealed with the plastics film tapes.

19. A process for producing a multilayered thick film or a sheet from film composites, in which, instead of individual plastics film tapes, as starting material multilayered film composites produced as claimed in one or more of claims 15 to 18 are sealed together.

## Revendications

1. Dispositif pour la fabrication d'un composite multicouches à partir de bandes de matériaux laminées ensemble, comprenant un nombre de rouleaux d'alimentation sur lesquels sont enroulés les matériaux sous forme de bandes qui sont dirigées sur une ligne de laminage horizontale plane par l'intermédiaire de cylindres presseurs deux à deux opposés et restant en contact l'un avec l'autre, dans lequel les bandes de matériaux superposées en couches arrivées dans la ligne plane de laminage espacées les uns des autres à des intervalles identiques ou différents sont soudables ensemble en un composite par l'application de pression et de chaleur au moyen des cylindres presseurs et dans lequel au moins une installation de refroidissement, d'estampage et/ou de pressage est installée à la suite de la ligne de laminage, caractérisé en ce que, les bandes de matériaux sont des bandes de feuilles en matière plastique soudables ensemble qui sont soumis entre les cylindres presseurs chauffables (2, 3, 4, ...8, 9, ...) à une pression linéaire réglable de manière définie, en ce que l'on place entre les rouleaux d'alimentation et les cylindres presseurs des cylindres de guidage (21) par lesquels on guide les bandes de feuilles en matière plastique vers les cylindres presseurs, et en ce que l'on dispose, pour modifier de manière définie les caractéristiques mécaniques des bandes de feuilles en matière plastique et, si nécessaire, pour commencer à faire fondre les couches soudables des bandes de feuilles en matière plastique, près de chacune des surfaces de contact des cylindres presseurs deux à deux opposés (2, 3; 4, 5; 6, 7; 8, 9;...) respectivement un dispositif de chauffage (10, 11, ...17, ...) que l'on peut déplacer le long d'une partie du trajet de la bande de feuilles en matière plastique, et dont on peut ajuster l'écartement avec la ligne plane de laminage et soudage.

2. Dispositif selon la revendication 1, caractérisé en ce que, le nombre des bandes de feuilles soudables en matière plastique est inférieur/égal au nombre de cylindres presseurs, qui est de 60 ou plus.

3. Dispositif selon la revendication 1, caractérisé en ce que, les cylindres presseurs deux à deux opposés peuvent être mis en pression avec une intensité variable les uns contre les autres de manière hydraulique, pneumatique ou mécanique, pour exercer une pression variable sur une ligne sur la bande individuelle constituée de feuilles en matière plastique que l'on soude sur les bandes de feuilles en matière plastique déjà soudées entre elles.

4. Dispositif selon la revendication 1, caractérisé en ce que, le cylindre presseur individuel est un cylindre presseur chauffé comprenant un corps métallique et un revêtement de caoutchouc.

5. Dispositif selon la revendication 1, caractérisé en ce que le cylindre presseur individuel est un cylindre presseur chauffé d'un poli miroir sans revêtement de caoutchouc.

6. Dispositif selon la revendication 1, caractérisé en ce que, le dispositif de chauffage individuel (10, 11, ...17, ...) est un émetteur infrarouge déplaçable le long de la bande de feuilles en matière plastique.

7. Dispositif selon la revendication 1, caractérisé en ce que, le stratifié multicouches (25) passe, après avoir quitté la ligne plane de soudage (1) dans une installation de refroidissement comprenant un ventilateur (26) et un cylindre de refroidissement à température réglable(27) et/ou une presse à deux bandes sans fin (29) à température réglable.

8. Dispositif selon la revendication 1, caractérisé en ce que, dans le sens de défilement du stratifié (25), après la ligne de soudage (1), l'on place une station d'estampage (35) comprenant une bande d'estampage (47) tournant sans fin que l'on peut mettre en contact avec un cylindre de guidage (47) placé en vis à vis, et en ce que l'on guide le stratifié (25) entre le cylindre de guidage (48) et la bande d'estampage (47) qui estampe la face du stratifié tournée vers elle.

9. Dispositif selon la revendication 1, caractérisé en ce que, l'on peut faire passer le stratifié (25) entre deux cylindres (49, 50) placés ensemble à la sortie de la ligne de soudage (1) l'un en face de l'autre, sur lesquels sont amenées des feuilles d'estampage (34, 35), et en ce que les feuilles d'estampage pourvoient d'un estampage la face inférieure et la face supérieure du stratifié et sont guidées sur des parties de périmètre des rouleaux et sont enroulées après l'étape d'estampage.

10. Dispositif selon la revendication 1, caractérisé en ce que, le stratifié (25) passe après la ligne de soudage (1) entre deux rouleaux d'estampage d'une station d'estampage (37).

11. Dispositif selon une ou plusieurs des revendications 1 à 10, caractérisé en ce que, le stratifié (25) est guidé selon un trajet en méandres avec un effort de traction élevé à travers des rouleaux à température réglable (39, 40) qui sont décalés les uns par rapport aux autres dans la direction verticale et dont les surfaces sont d'un poli miroir ou structurées et qui sont disposées en aval de la ligne de soudage (1).

12. Dispositif selon une ou plusieurs des revendications 1 à 6, caractérisé en ce que, le stratifié (25) traverse à plat après avoir quitté la ligne de soudage (1) un dispositif de refroidissement (46) qui comprend un nombre de ventilateurs (41) et/ou de cylindres de refroidissement (44, 45) qui, placés en quinconce, sont en contact alternativement avec la face supérieure et inférieure du stratifié (25).

13. Procédé de fabrication d'un stratifié multicouches à partir de bandes de matériaux laminées ensemble par soudage sous l'application de pression et de chaleur au moyen du dispositif selon la revendication 1, caractérisé en ce que, le composite est constitué de feuilles de matière thermoplastique étirées de manière biaxiale et/ou monoaxiale et/ou non étirées, qui sont co-extrudées au minimum sur une face avec une couche de soudage et est réalisé par soudage additionnel en continu de bandes de feuilles en matière plastique individuelles en mouvement sur une première bande de feuilles en matière plastique en mouvement, jusqu'à une épaisseur finale prédéfinie, les bandes de feuilles en matière plastique étant amenées séparément à distance les unes par rapport aux autres dans une ligne de soudage plane et guidées le long de cette ligne de soudage, en ce que, l'on chauffe de façon supplémentaire chaque bande de feuilles en matière plastique avant l'entrée dans la ligne de soudage plane pour influencer de manière ciblée les caractéristiques mécaniques des bandes de feuilles individuelles et pour commencer à faire fondre selon le besoin les couches de soudage des bandes de feuilles en matière plastique, en ce que l'on applique une pression sur chacune des bandes de feuilles en matière plastique directement à sa position d'entrée dans la ligne de soudage, et en ce que l'on refroidit le stratifié après sa sortie de la ligne de soudage par soufflage d'air de refroidissement et/ou par contact avec des cylindres de refroidissement et/ou par une presse à deux bandes sans fin à température réglable et on l'estampe sur une ou deux faces.

14. Procédé selon la revendication 13, caractérisé en ce que, l'on soude entre elles des bandes de feuilles en matière plastique similaires ou différentes.

15. Procédé selon la revendication 14, caractérisé en ce que, l'on soude ensemble les bandes formées d'une seule feuille du même matériau polymère, étirées de manière mono- et/ou biaxiales ainsi que non étirées, placées alternativement en couches successives les unes sur les autres, les bandes de feuilles non étirées présentant une température de fusion plus basse que les bandes de feuilles étirées.

16. Procédé selon la revendication 13, caractérisé en ce que, l'on maintient le température de soudage en dessous de la température de fusion des bandes de feuilles en matière plastique individuelles.

17. Procédé selon une ou plusieurs des revendications 13 à 16, caractérisé en ce que l'on effectue les étapes de traitement de refroidissement par air, contact avec un rouleau de refroidissement et/ou une double presse refroidie et d'estampage du stratifié après sa sortie de la ligne de soudage dans toutes les combinaisons possibles.

18. Procédé selon la revendication 13, caractérisé en ce que l'on soude en continu comme matériau de départ pour le stratifié, en supplément des bandes de feuilles en matière plastique, des bandes d'autres matériaux qu'une matière plastique et des composites de ces bandes avec des bandes en matière plastique.

19. Procédé pour la fabrication d'une feuille épaisse multicouches ou d'une plaque constituée de stratifiés, dans lequel on soude ensemble comme matériau de départ au lieu de bandes de feuilles individuelles en matière plastique, des stratifiés multicouches qui sont fabriqués selon une ou plusieurs des revendications 13 à 18.
